# EUROPÄISCHE PATENTSCHRIFT

(11) **EP 0 577 546 B1**
(45) Veröffentlichungstag und Bekanntmachung des Hinweises auf die Patenterteilung: **25.09.1996**
(21) Anmeldenummer: 93810295.1
(22) Anmeldetag: 22.04.1993
(51) Int. Cl.: E01C 23/06, E01C 11/14, E01C 23/09, B23B 51/00

(54) **Verfahren zur Lagestabilisierung von durch Fugen getrennten Beton- oder Steinplatten oder Betonbelägen**
Process for position stabilisation of joints in concrete or stone slabs or concrete coverings
Procédé de stabilisation de position de joints de dalles de béton ou de pierre ou de revêtements en béton

(30) Priorität: 30.06.1992 CH 2045/92
(43) Veröffentlichungstag der Anmeldung: 05.01.1994
(73) Patentinhaber: S.A. CONRAD ZSCHOKKE, CH-1211 Genève 6 (CH)
(72) Erfinder: Cargill, Jean, CH-1219 Aire (CH); Trepp, Willy, CH-1219 Aire (CH)
(74) Vertreter: Bosshard, Ernst

(56) Entgegenhaltungen:
- EP-A- 0 338 983
- DE-U- 8 901 117
- DE-U- 9 108 495
- FR-A- 2 408 015
- US-A- 4 453 360
- US-A- 4 834 576

## Beschreibung

Die Erfindung bezieht sich auf ein Verfahren zur Lagestabilisierung von durch Fugen getrennten Beton- oder Steinplatten oder Betonbelägen, insbesondere von Flugpisten und Strassen.

Die Erfindung bezieht sich ferner auf eine aushärtende, schwindungsfreie, kunstharzgebundene Stopfmasse zur Durchführung dieses Verfahrens.

Bei Flugpisten und Strassen, die Betonplatten oder Betonbeläge mit Fugen aufweisen, besteht ein Problem darin, dass sich mit der Zeit unter der ständigen, vorwiegend stossweisen Belastung an den Fugen Höhenunterschiede benachbarter Platten oder Beläge ergeben. Derartige Absätze sind sehr unerwünscht, da sie beispielsweise bei Flugpisten zur Beschädigung der Pneus und im Extremfall zum Platzen der Pneus führen können.

Aus der DE-U-9'108'495 ist eine Vorrichtung zur Herstellung von Hinterschnitten in Bohrungen von Betonmaterial bekannt. Zur starren Verbindung von benachbarten Betonplatten können derartige hinterschnittenen Bohrungen mit einem Zementmörtel ausgefüllt werden. Dadurch werden benachbarte Betonplatten untereinander starr verbunden und gegen Vertikalverschiebungen gesichert, aber eine solche Verbindung ist der Verwerfungsgefahr bei Längenausdehnungen bei Temperaturschwankungen ausgesetzt.

Mit der Erfindung soll die Aufgabe gelöst werden, zwischen benachbarten Beton- oder Steinplatten oder gefugten Betonbelägen zum Ausgleich von Längendehnungen der Baustoffe infolge Temperaturschwankungen eine horizontale Dilatationsbewegung zu ermöglichen, unter Beibehaltung der vertikalen Lagestabiliserung.

Die Erfindung, mit der diese Aufgabe gelöst wird, ergibt sich aus den Ansprüchen 1 und 4.

Durch die aushärtenden Stopfen, welche in die hinterschnittenen Bohrungen eingreifen, ergibt sich eine Lagestabilierung der Bauteile in vertikaler Richtung. Zugleich ist eine gegenseitige Bewegung der Bauteile in horizontaler Richtung möglich, da das Trennmittel eine Verbindung der Stopfen in den Bohrungen der Bauteile verhindert, sodass eine horizontale Dilatationsbewegung nicht behindert ist.

In der Zeichnung ist ein Ausführungsbeispiel der Erfindung dargestellt. Es zeigen:
- Fig. 1: einen Querschnitt durch eine hinterschnittene Bohrung
- Fig. 2: eine Vorrichtung zur Erstellung von Hinterschnitten
- Fig. 3: einen Querschnitt durch die Bohrung mit Hinterschnittwerkzeugen

Zur Stabilisierung der vertikalen Lage benachbarter Betonplatten oder -Beläge oder Steinplatten, die durch eine Fuge getrennt sind, werden vertikale Bohrungen erstellt. Diese Bohrungen haben beispielsweise einen gegenseitigen Abstand von etwa 40 - 120 cm und die Bohrachse befindet sich je auf der Fugenmitte. Solche zylindrische Bohrungen 28 von beispielsweise etwa 100 mm Durchmesser werden mittels eines ringförmigen Kernbohrers ausgeführt, wobei der abgetrennte Kern nach durchgeführtem Bohrvorgang aus dem Bohrloch herausgehoben wird.

Hernach werden in den zylindrischen Bohrungen 28 je mindestens ein Hinterschnitt angebracht. Unter "Hinterschnitt" wird verstanden, dass in der Bohrung 28 an einer oder mehreren von den Bohrungsenden distanzierten Stellen eine ringförmige Ausnehmung, beispielsweise in Form einer Ausnehmung mit einem gegenüber dem Bohrungsdurchmesser grösseren Durchmesser erzeugt wird. Die obere und untere Ringfläche 12 dieses Hinterschnittes verlaufen zueinander vorzugsweise parallel oder leicht konisch und die dazwischenliegende Fläche ist zylindrisch oder gerundet und erstreckt sich koaxial zur Bohrungsachse. Damit die hinterschnittene Bohrung 28 die ihr zukommende Funktion erfüllen kann, sind bestimmte Bemessungen zu beachten, einerseits um die zur Bildung der Hinterschnitte abzutragende, Zeit und Kosten verursachende Materialmenge möglichst gering zu halten und andererseits ausreichende Druckfestigkeitswerte zu erhalten. Der Durchmesser d des Hinterschnittes soll deshalb beispielsweise das 1,2 - 1,6 fache, vorzugsweise etwa das 1,4 fache des Bohrungsdurchmessers D betragen. Ferner soll die Höhe H eines Hinterschnittes mindestens das 0,5 fache, vorzugsweise etwa das 0,7 fache des Bohrungsdurchmessers ausmachen. Ausserdem ist es zweckmässig den Abstand A eines Hinterschnittes bis zum nächsten Hinterschnitt oder bis zur nächsten Bohrungsdurchmesservergrösserung oder bis zum oberen Bohrungsende grösser zu wählen als die Höhe H eines Hinterschnittes.

Anstelle eines einzigen Hinterschnittes können zwei oder mehrere in Axialrichtung voneinander distanzierte Hinterschnitte angebracht werden. Die Anzahl der Hinterschnitte und ihre Dimensionen sind von den jeweiligen Gegebenheiten und Anforderungen abhängig.

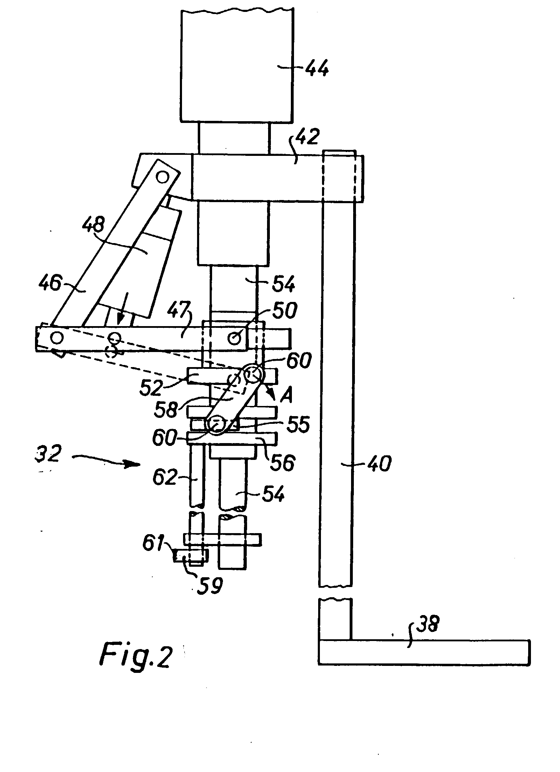

Zur Herstellung der Hinterschnitte dient eine Vorrichtung 32, wie sie aus den Fig. 2 und 3 hervorgeht. Nachdem eine zylindrische Bohrung 28 hergestellt worden ist, wird die Vorrichtung 32 so über dem Bohrloch 28 angeordnet, dass deren Drehachse koaxial zur Bohrlochachse verläuft. Von einem Fuss 38 ausgehend erstreckt sich ein Träger 40 nach oben. Am oberen Ende des Trägers 40 befindet sich eine Befestigungsklemme 42, an welcher der Kopf eines hydraulischen oder elektrischen Antriebsmotors 44 festgemacht ist. Vom äusseren Ende der Befestigungsklemme 42 erstreckt sich ein gelenkig befestigter Arm 46 nach unten. Das untere Ende des Armes 46 ist gelenkig mit einer Gabel 47 verbunden. Mit der Gabel 47 ist ein doppelwirksames Hubaggregat 48 gelenkig befestigt. Beidseitig der Gabel 47 greift je ein Bolzen 50 in einen in Vertikalrichtung verschiebbaren Verstellkörper 52 ein, welcher eine drehbare Welle 54 lose umgibt. Im vertikalen Abstand unterhalb des Verstellkörpers 52 befindet sich ein Kulissenring 56, der mit der Welle 54 drehfest verbunden ist. Zwischen dem Verstellkörper 52 und dem Kulissenring 56 sind drei Laschen 58 vorhanden, je mit Kugelgelenken 60. Mit den unteren Kugelgelenken ist je über ein radiales Verbindungsglied 55 eine vertikale Stange 62 verbunden, an deren unterem Ende sich je ein Hebel 59 befindet, die je einen mit Diamantsplittern besetzten Schleifschuh 61 tragen. Wenn sich somit die Gabel 47 unter der Wirkung des Hubzylinders 48 nach unten bewegt, bewirkt dies eine Verschwenkung der Laschen 48 in Richtung des Pfeiles A. Dadurch verschwenken sich die vertikalen Stangen 62 um ihre Längsachse und mit diesen die Hebel 59 mit den Schleifschuhen 61. Bei einer Drehung der Welle 54 bewirkt dies, dass von der Bohrungswand Material abgetragen wird und in der zuvor zylindrischen Bohrung eine ringförmige Ausnehmung 35 in Form eines Hinterschnittes gebildet wird.

In Fig. 2 ist der besseren Uebersicht halber nur eine einzige Stange 62 mit einem starr befestigten Hebel 59 mit Schleifschuh 61 dargestellt; in Wirklichkeit sind mehrere, vorzugsweise drei dieser Organe vorhanden, wie dies aus Fig. 3 hervorgeht.

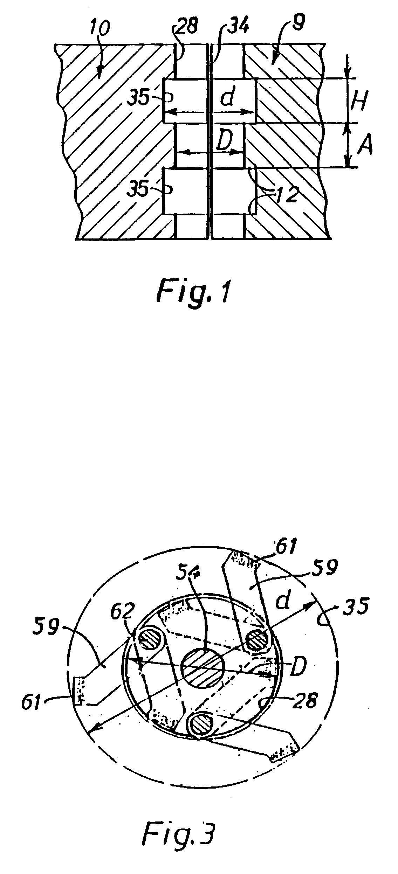

Falls in den Bohrungen jeweils mehrere Hinterschnitte zu erzeugen sind, wie dies aus Fig. 1 hervorgeht, wird die Welle 54 in unterschiedliche Tiefen der Bohrung 28 abgesenkt, wodurch mehrere Hinterschnitte nacheinander erzeugt werden können.

An Stelle eines einzigen Satzes dieser Hinterschnitt-Werkzeuge 59, 61 könnten auch mehrere derselben mit vertikalem Abstand übereinander angeordnet werden, sodass mehrere Hinterschnitte gleichzeitig erzeugt werden können.

Nach Erstellung der Bohrlöcher 28 mit Hinterschnitt 35 wird in diese Oeffnungen eine aushärtende Stopfenmasse eingegossen, die sich mit dem Bohrloch-Material nicht verbindet.

Das Bohrloch wird vor dem Einfüllen der Stopfenmasse gereinigt und mit einem Trennmittel überzogen, das eine Verbindung mit dem Stopfenmaterial verhindert. Das Trennmittel kann beispielsweise ein Silikon-Harz oder -Oel oder Polytetrafluoräthylen (Teflon) sein bzw. enthalten. Das Auftragen dieses flüssigen oder pastösen Trennmittels kann beispielsweise mit einem Pinsel oder durch eine Spritzpistole erfolgen. Ferner ist es möglich dieses Trennmittel in Form einer Folie oder eines Formstückes in die hinterschnittene Bohrung einzulegen.

Damit die Stopfenmasse eine möglichst hohe Festigkeit zur Aufnahme der in Vertikalrichtung wirkenden Kräfte hat, in kurzer Zeit aushärtet und praktisch schwindungsfrei ist, wird nicht eine übliche Beton-Mörtelmasse sondern eine mit Kunstharz gebundene Masse mit mineralischem Anteil verwendet. Die nachfolgend beschriebene Zusammensetzung hat sich für diesen Zweck als geeignet erwiesen:
- Industrielles Polyesterharz: 6 - 9 Gewichtsprozent,
- Kunststoff-Mischharz: 2 - 5 Gewichtsprozent,
- Styrol Verdünner: 1 - 2 Gewichtsprozent,
- Härter und Beschleuniger: 2 - 5 Gewichtsprozent
- Rest: Quarzsand und Kalkmehl, im Gewichtsverhältnis von etwa 1 : 2.

Diese Bestandteile sind handelsübliche Produkte, wobei das Kunststoff-Mischharz von der Firma Hüls Chemie AG, Marl(Deutschland) stammt. Der Anteil des Härters variiert je nach Verarbeitungstemperatur und gewünschter Verarbeitungszeit.

Nach dem Einbringen dieser Stopfenmischung in die mit Hinterschnitten versehenen Bohrlöcher und dem anschliessenden Aushärten bewirkt der so gebildete Stopfen eine Lagestabilisierung der benachbarten Bauteile 9, 10 in vertikaler Richtung. In horizontaler Richtung wird die Dilatation nicht behindert, sodass die Fuge je nach Umgebungstemperatur eine unterschiedliche Breite annehmen kann. Dadurch lassen sich Spannungen in Horizontalrichtung zwischen den Bauteilen vermeiden.

## Patentansprüche

1. Verfahren zur Lagestabilisierung von durch Fugen (34) getrennten Beton- oder Steinplatten oder Betonbelägen (9,10), insbesondere von Flugpisten und Strassen, wobei in gegenseitigen Abständen auf die Fugen (34) zentrierte vertikale zylindrische Bohrungen (28) erstellt werden und diese Bohrungen (28) anschliessend hinterschnitten werden, wobei die hinterschnittenen Bohrungen (28) zur gegenseitigen vertikalen Lagestabilisierung der anstossenden Bauteile (9,10) mit einer aushärtenden Stopfmasse ausgefüllt werden, dadurch gekennzeichnet, dass die Stopfmasse eine schwindungsfreie, kunstharzgebundene Stopfmasse ist und dass vor dem Ausfüllen der hinterschnittenen Bohrungen (28) mit der Stopfmasse auf die Bohrungswandungen der hinterschnittenen Bohrungen (28) ein flüssiges oder pastöses Trennmittel aufgebracht wird, um eine Verbindung zwischen der ausgehärteten Stopfmasse und den anstossenden Bauteilen (9,10) zu verhindern und dadurch eine horizontale Dilatationsbewegung der anstossenden Bauteile (9,10) im Bereich der Fugen (34) zu ermöglichen.

2. Verfahren nach Anspruch 1, dadurch gekennzeichnet, dass der Durchmesser (d) eines Hinterschnittes (35) das 1,2-1,7 fache, vorzugsweise etwa das 1,4 fache des Bohrungsdurchmessers (D) beträgt, die Höhe (H) eines Hinterschnittes (35) mindestens das 0,5 fache, vorzugsweise etwa das 0,7 fache des Bohrungsdurchmessers (D) beträgt und der Abstand (A) eines Hinterschnittes (35) bis zum oberen Bohrungsende oder bis zum nächsten Hinterschnitt (35) oder Durchmesservergrösserung grösser als die Höhe (H) eines Hinterschnittes ist.

3. Verfahren nach einem der Ansprüche 1 oder 2, dadurch gekennzeichnet, dass als Trennmittel ein Silikon-Harz oder Silikon-Oel oder Polytetrafluoräthylen verwendet wird.

4. Aushärtende, schwindungsfreie, kunstharzgebundene Stopfmasse zur Durchführung des Verfahrens nach Auspruch 1, bestehend aus:
- Industrielles Polyesterharz: 6-9 Gewichtsprozent,
- Kunststoff-Mischharz: 2-5 Gewichtsprozent,
- Styrol (Verdünner): 1-2 Gewichtsprozent,
- Härter und Beschleuniger: 2-5 Gewichtsprozent,
- Rest: Quarzsand und Kalkmehl, im Gewichtsverhältnis von etwa 1 : 2.

## Claims

1. Process for position stabilisation of joints (34) in concrete or stone slabs or concrete coverings (9, 10), in particular on runways and roads, in which vertical cylindrical bores (28) are made at mutual distances centred on the joints (34) and said bores (28) are subsequently undercut, whereby the undercut bores (28) are filled with a hardening filler for the vertical position stabilisation of adjoining components (9, 10), characterised in that the filler is a shrinkage-free, synthetic resin bound filler, and in that before filling the undercut bores (28) with the filler a liquid or paste-like separating agent is applied to the bore walls of the undercut bores (28) in order to prevent a connection between the hardened filler and the adjoining components (9, 10) and in this way to permit a horizontal dilation movement of the adjoining components (9, 10) in the region of the joints (34).

2. Process according to claim 1, characterised in that the diameter (d) of an undercut (35) is 1.2-1.7 times, preferably about 1.4 times the bore diameter (D), the height (H) of undercut (35) is at least 0.5 times, preferably about 0.7 times the bore diameter (D) and the distance (A) of an undercut (35) up to the upper bore end or up to the next undercut (35) or diameter increase is greater than the height (H) of an undercut.

3. Process according to one of claims 1 or 2, characterised in that silicone resin or silicone oil or polytetrafluoroethylene is used as a separating agent.

4. A hardening, shrinkage-free, synthetic resin bound filler for performing the process according to claim 1, comprising:
- industrial polyester resin : 6-9 % by weight
- synthetic-mixed resin : 2-5% by weight
- styrene (thinner) : 1-2 % by weight,
- curing agent and accelerator: 2-5% by weight,
- other : quartz sand and lime powder in a weight ratio of about 1 : 2.

## Revendications

1. Procédé de stabilisation de dalles et béton ou de pierre, ou de revêtements en béton séparés par des joints (34) en particulier de pistes d'aviation ou de chaussées de circulation, dans lequel on réalise dans les joints des perçages cylindriques verticaux (28) centrés et espacés entre eux, qui sont ensuite contre-dépouillés, et dans cet état, pour stabiliser verticalement les uns par rapport aux autres les éléments (9, 10) contigus, sont remplis d'une masse-tampon durcissante,
caractérisé en ce que
la masse-tampon est une matière sans retrait, liée par des résines synthétiques et qu'avant de remplir les perçages à contra-dépouille (28) par la masse-tampon, on dépose, sur les parois des perçages à contre-dépouille (28), un agent d'isolement liquide ou pâteux, afin d'empêcher que s'établisse une liaison entre la masse-tampon durcie et les éléments contigus (9, 10) et qu'ainsi les éléments puissent se dilater horizontalement au niveau des joints (34).

2. Procédé selon la revendication 1,
caractérisé en ce que
le diamètre (d) d'une contre-dépouille (35) atteint de 1,2 à 1,7 fois, de préférence environ 1,4 fois, le diamètre (D) du perçage, tandis que la hauteur (H) d'une contre-dépouille (35) est égale à 0,5 fois au moins, de préférence environ 0,7 fois, le diamètre (D) du perçage et la distance (A) d'une contre-dépouille à la fin du perçage supérieur ou à la contre-dépouille (35) la plus proche ou à une partie élargie du diamètre est supérieure à la hauteur (H) d'une contre-dépouille.

3. Procédé selon une des revendications 1 ou 2,
caractérisé en ce que
l'agent d'isolement utilisé est une résine de silicone ou une huile de silicone ou du polytétrafluoréthyléne.

4. Masse-tampon durcissant sans retrait, liée par des résines synthétiques, destinée à la mise en oeuvre de procédé selon la revendication 1 et composée comme suit :
- 6 à 9 % en poids d'une résine industrielle de polyester,
- 2 à 5 % en poids d'un mélange de matière plastique et de résine,
- 1 à 2 % en poids de styrène (diluant),
- 2 à 5 % en poids de durcissant et d'accélérateur.
le reste étant constitué de sable quartzeux et de poudre de calcaire mélangés dans le rapport pondéral 1/2.
